# EUROPEAN PATENT SPECIFICATION

(11) **EP 3 456 675 B1**
(45) Date of publication and mention of the grant of the patent: **15.01.2020**
(21) Application number: 17382613.2
(22) Date of filing: 15.09.2017
(51) Int. Cl.: B66B 7/06

(54) **ELEVATOR SYSTEMS**
AUFZUGSYSTEME
SYSTÈMES D'ASCENSEUR

(43) Date of publication of application: 20.03.2019
(73) Proprietor: Alimak Group Management AB, 111 51 Stockholm (SE)
(72) Inventor: Legua Gracia, Carlos, 50015 ZARAGOZA (ES)
(74) Representative: ZBM Patents - Zea, Barlocci & Markvardsen

(56) References cited:
- JP-A- 2007 284 222
- JP-U- S5 423 473
- JP-U- S5 820 270

## Description

The present disclosure relates to elevator systems, for example, service elevator systems configured for use in wind turbine towers. The present disclosure further relates to wind turbines comprising such elevator systems.

### BACKGROUND

Modern wind turbines are commonly used to supply electricity into the electrical grid. Wind turbines generally comprise a rotor with a rotor hub and a plurality of blades. The rotor is set into rotation under the influence of the wind on the blades. The rotation of the rotor shaft drives the generator rotor either directly ("directly driven") or through the use of a gearbox. The operation of the generator produces the electricity to be supplied into the electrical grid.

When maintenance works are required inside wind turbines, hoists are often used in the form of elevator-like structures where a lift platform or a cabin for the transportation of people and/or equipment is hoisted up and down within the wind turbine tower. Wind turbines are often provided with working platforms arranged at various altitudes along the height of the tower with the purpose of allowing workers to leave the cabin and inspect or repair equipment where intended or needed. These sorts of elevator systems are also known in other applications, such as e.g. factories, construction sites, and all sorts of towers.

Elevator systems in general include an elevator car or cabin that is suspended within a hoistway or elevator shaft by wire ropes or any other relatively thick cable. In some systems, e.g. for some electric elevators, a counterweight may be provided, depending *inter alia* on the available space. Other systems such as hydraulic elevators normally do not comprise a counterweight. Typically, elevator systems include a moving, trailing or travelling cable for supplying electric power to the elevator cabin and/or for signal communication between components associated with the elevator cabin and a control panel provided in a fixed location relative to the hoistway or elevator shaft. Such a control panel may be provided at any height up in the elevator shaft.

Wind turbines are high slender structures that are usually supported by a closed tower. The cables of a wind turbine elevator system are thus protected from outside atmospheric conditions. Nevertheless, due to wind forces, the high and slender tower may oscillate significantly. Wind forces may further be increased by rotor rotation and become even higher in offshore wind turbines wherein wind forces are further increased by forces exerted by waves, currents and tides. This is most prominent in high slender structures, such as e.g. tower of larger (MW class) wind turbines, in which the tower may oscillate significantly. For these reasons, it is desirable that elevator cabins arranged inside wind turbine towers run controlled by e.g. taut lines or cables, a rail, a ladder or any other rigid guiding element extending all the way from the top to the bottom of the wind turbine tower (elevator path).

Elevator systems of the type that are "ladder-guided" or "cable-guided" normally comprise traction and/or safety wire ropes that run free in a direction parallel to the movement of the elevator cabin.

In use, there may be circumstances in which the traction and/or safety wire ropes may begin to move and sway within an elevator shaft or the wire ropes can become tangled up in themselves, particularly inside e.g. the tower of larger (MW class) wind turbines. In these cases, the traction and/or safety wire ropes can also strike the working platforms, platform fences or tower flanges provided inside the elevator shaft. It might even happen, e.g. inside the tower of larger wind turbines, that the traction and/or safety wire ropes may come in contact with or potentially get entangled with the power cables from the wind turbine generator.

Other circumstances in which the traction and/or safety wire ropes may come in contact with other components may occur in wind turbine towers in which an elevator path may be curved, e.g. because at the base there is an electronic compartment on one side or because the available space for housing the elevator and, e.g. the ladder, requires a change in the orientation of the elevator. The wind turbine towers are generally conical, and a displacement in the elevator path may be necessary to maintain a minimum distance with respect to e.g. a ladder. Since the traction and/or safety wire ropes run free, they seek to straighten out. This may result in them striking or interfering with the working platforms, tower flanges or a ladder provided at the elevator shaft inner surface.

Further circumstances that result in the traction and/or safety wire ropes touching parts within a tower relate to the shape of the towers. In some cases, a major or minor tapering of the tower is required e.g. due to a change of the material from which the tower is built. For example, a bottom portion of a tower may be made from concrete and an upper portion of the tower may be made from steel. In these situations, the distance of the wire ropes to the inner walls of the tower may vary from one section to the other and the orientation of the elevator may need to be changed. Again, as the traction and/or safety wire ropes seek to straighten out, this may result in the wire ropes striking the working platforms or tower flanges provided on the inner surface of the elevator shaft.

As mentioned above, in such tall structures, in general, elevator ropes and cables, which may include hoist ropes, compensation ropes, governor ropes, and travelling cables, may vibrate in harmony with the wind induced sway of the structure and other dynamic factors affecting the structure. Particularly in wind turbines, several loads such as, for example, aerodynamic forces associated with the wind, rotor rotation, etc. may act on the structure. These loads may further be increased in offshore wind turbines by the forces exerted by waves, currents and tides.

The aforementioned loads can produce vibrations and sway of the ropes and cables which may cause fatigue and wear, excessive noise, and the increased possibility of tangling thus potentially shortening the lifetime of the ropes and cables and complicating normal operation of the elevator system.

EP2923988 discloses elevator systems comprising traction and/or safety wire ropes which also comprise transverse elements adapted to be guided along the traction and/or safety wire ropes and provided above the elevator cabin. In these systems, the transverse elements rest on support structures that impede its movement in a downwards and a horizontal directions and allow its movement in an upwards direction. These transverse elements aid in stabilizing the traction and/or safety wire ropes even when loads producing vibration and sway of these wire ropes are acting. In these cases, when the elevator cabin is going upwards and reaches a position in which a transverse element is resting, the cabin pushes the transverse element from below thereby dragging the transverse element with its upwards movement.

In these cases, in order for the cabin to be able to push the transverse element from below in a smooth manner, a top part of the elevator cabin needs to be adapted to incorporate a buffer element. However, in circumstances e.g. in the event the elevator cabin is carrying or includes e.g. fragile components it might be desirable to avoid any impacts of the elevator cabin. Impacts of the elevator cabin with such transverse elements may also affect normal operation of detection systems, e.g. obstacle detection devices that may be arranged at the top of the elevator cabin. Or in any case, a suitable design that does not affect the proper functioning of such an obstacle detection device is necessary and this can be complicated.

JP S54-23473 discloses an elevator suspended from one end of a hoisting rope and a rope guide tool guided by rails. A support rope is secured to the counterweight. When the counterweight is raised and lowered in accordance with the ascending and descending operation of the elevator cabin, the rope guiding tool will move as well.

As such there is still a need for reliable and effective elevator systems that are able to reduce or eliminate at least some of the afore-mentioned drawbacks.

### SUMMARY

In accordance with a first aspect, an elevator system is provided. The elevator system comprises an elevator cabin configured to perform an up and down movement along an elevator path, and a traction wire rope for driving the elevator cabin in the up and down movement and/or a safety wire rope. The elevator system further comprises a wire guiding system including a transverse element provided above the elevator cabin in the elevator path. The transverse element is adapted to be guided along the traction wire rope and/or safety wire rope, and the wire guiding system further comprises a pulley cable system operationally coupled to the elevator cabin and to the transverse element such that along at least a portion of the elevator path, the transverse element moves in the same direction as the elevator cabin.

According to this aspect, the transverse element acts as a spacer for the traction and/or security wire ropes with respect to each other and to other components such as e.g. a ladder, working platforms, tower flanges or even an inner wall of the elevator path. Furthermore, the pulley cable system that is operationally coupled to the elevator cabin and to the transverse element moves/displaces the transverse element as a function of the elevator cabin up and down movement. Put in other words, the pulley cable system is configured to displace the transverse element in an upwards or a downwards direction along the elevator path in response to the up and down movement of the cabin. Thus, the transverse element contributes to the stabilization of the traction and/or security wire ropes even when loads producing vibrations and sway of the wire ropes are acting. This is done in a manner that avoids or at least reduces impacts of the elevator cabin. Furthermore, since the transverse element is moved by the pulley cable system it is not necessary to adapt the cabin e.g. by proving a bumper or a buffer element on the cabins' roof. As mentioned above, a transverse element substantially as hereinbefore described restricts movements of the traction and/or security wire ropes housed inside the elevator path thereby avoiding, or at least reducing, the striking of these wires with other components that may be arranged in the elevator path. In addition, in circumstances, e.g. when a distance between e.g. a ladder or working platforms of the elevator path and the wires is not enough to allow safe climbing of users, the transverse element can provide the required distance between the ladder and the wires, i.e. it may act as a spacer. A transverse element substantially as hereinbefore described thus further aids reducing entangling of the wires with themselves.

The system is also relatively simple to implement and can easily be retrofitted in existing elevator installations having one or more traction and/or security wire ropes.

In some examples, the transverse element may be supported at a predetermined height along the elevator path such that its movement in a downwards direction is impeded whereas it is configured to be pulled in an upwards direction from the pulley cable system. In some of these examples, the height may be substantially one half a height of the up and down movement of the elevator cabin along an elevator path. In these cases, a pulley cable system that is configured to displace the transverse element at a speed that is substantially one half the speed of the elevator cabin is enough. Depending on circumstances, e.g. the total height of the elevator path and/or the provision or not of curved elevator paths, a transverse element arranged higher than one half the height of the elevator path may be needed, e.g. a transverse element provided at 75% the height of the elevator path. In these cases, the speed provided by the pulley cable system might be reduced to, e.g. to a quarter the speed of the elevator cabin.

In further examples, a pulley cable system configured to displace the transverse element at a speed that is substantially the same as that of the elevator cabin may be foreseen. In these cases, the transverse element may be supported at a height lower than one half the height of the elevator path. Suitable spacing between cables and/or other elements may be needed also in lower parts of the elevator path. These examples may be particularly suitable for high and slender structures and/or e.g. when a section of the structure has a conical shape. In these examples, as the transverse element and the elevator cabin move in unison, a distance between the transverse element and the elevator cabin is always the same.

The elevator systems substantially as hereinbefore described may be adapted or configured for a particular application, such as e.g. a wind turbine tower.

In a further aspect, the present disclosure provides a wind turbine comprising an elevator system substantially as hereinbefore described arranged within a wind turbine tower.

Throughout the present description and claims, an elevator path is to be understood as a space or passage through which the elevator can travel upwards and downwards. In a wind turbine tower, the elevator path is thus defined inside the tower. There may be a closed space inside the tower along which the elevator cabin travels. Alternatively, the space inside the tower along which the elevator path is defined may be open.

Throughout the present description and claims, a pulley is to be understood as covering any form of wheel or roller that guides or redirects a cable or wire rope along its circumference. Pulley herein thus covers e.g. sheaves with a specific groove around its circumference between two flanges, but also any other form of cable guiding wheel.

### BRIEF DESCRIPTION OF THE DRAWINGS

Non-limiting examples of the present disclosure will be described in the following, with reference to the appended drawings, in which:
Figure 1 shows a schematic side view of an elevator system according to an example;
Figure 2 shows a perspective partial view of the elevator system of figure 1;
Figures 3 and 4 show a schematic side view of an elevator system according to another example in two different positions of the elevator cabin;
Figure 5 shows a perspective partial view of the elevator system according to a different example;
Figures 6 and 7 show perspective partial views of an elevator system according to a different example;
Figure 8 shows a schematic side view of an elevator system according to yet a further example; and
Figures 9 and 10 show schematic side views of an elevator system according to another example in two different positions of the elevator cabin.

### DETAILED DESCRIPTION OF EXAMPLES

In these figures the same reference signs have been used to designate matching elements.

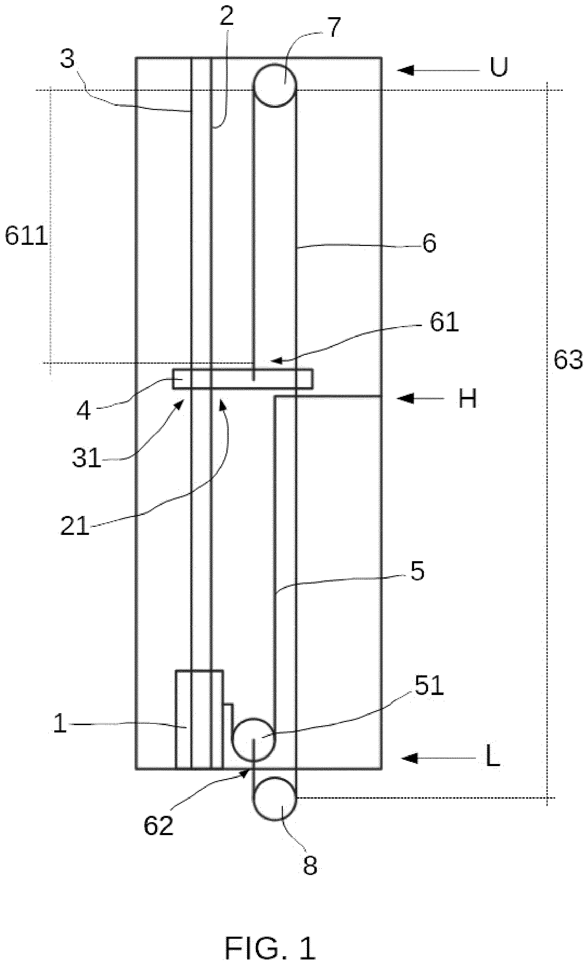

Figure 1 schematically shows a side view of an example of an elevator system. The elevator system comprises an elevator cabin 1 which may be moved up and down along an elevator path driven by a traction wire rope 2. A safety wire rope 3 is further provided. In alternative examples, more than one traction and/or security wire ropes, and even a single traction or security wire rope, may be foreseen. In further alternative examples, the elevator cabin may be driven by a rack and pinion arrangement and one or more security wire ropes may be provided.

A travelling cable 5 is further provided for supplying energy to the cabin 1 and/or for signal communications with components associated to the elevator cabin 1. The travelling cable 5 may be connected to a power supply at one end and to the elevator cabin 1 at the other end. A pulley 51 is arranged in a movably suspended manner on the travelling cable 5 such that the pulley 51 can self-travel along the travelling cable 5. One end of the travelling cable may be mounted at some point along the elevator path, particularly in this example it is mounted at a height H, at approximately half the total height of the elevator path. In case of an elevator system for a wind turbine, it may be attached at approximately half the total height of the tower. The other end of the travelling cable is directly fixed to the elevator cabin 1. This way, the travelling cable and the pulley can travel along together with the up and down movement of the elevator cabin.

In some examples, the pulley may further be guided along the traction and/or safety wire ropes of the elevator system. For example, the pulley may comprise a flange with holes for guiding the traction and/or safety wire ropes of the elevator system. The flange may be integrally formed with the pulley. Alternatively, it may be welded or it may be fixed with screws. In more examples top and lower flanges may be foreseen, each flange may comprise holes for guiding the traction and/or safety wire ropes. In more examples, the power supply may be provided at any height in the elevator path. In some examples, the pulley may be mounted on a pulley frame and the pulley with pulley frame form an assembly that is movably suspended on the travelling cable and travels with the up and down movement of the elevator cabin substantially as explained above.

According to this example, a transverse element 4 is provided above the elevator cabin 1 in the elevator path. The transverse element 4 is adapted to be guided along the traction wire rope 2 and/or security wire rope 3. For this purpose, the transverse element may comprise one or more orifices arranged substantially along the direction of the elevator cabin up and down movement, the orifice may be adapted to receive the traction and/or security wire ropes. In this example, two orifices 21, 31 are provided in correspondence with the traction 2 and security 3 wire ropes. In some examples, the orifice may further comprise a clamp, particularly an electromechanical clamp, adapted to selectively close towards the traction and/or security wire ropes depending on circumstances, e.g. when the elevator cabin is in standstill. Alternatively, pneumatic clamps may be foreseen.

Further in this example, a pulley wire rope 6 configured to pass around a top fixed diverting pulley 7 and a bottom fixed diverting pulley 8 is provided. In this example, one end 61 of the pulley wire rope 6 is directly fixed to the transverse element 4 and another end 62 of the pulley wire rope 6 is connected to the pulley 51 that is movably suspended from the travelling cable 5. This way, a pulley cable system operationally coupled to the elevator cabin and to the transverse element may be provided. Such a pulley cable system is thus configured to move or displace the transverse element in the same direction as the elevator cabin along at least a portion of the elevator path. A pulley cable system substantially as explained can thus displace the transverse element at the speed at which the pulley suspended from the travelling cable moves which is substantially one half the speed of the elevator cabin. This way, while the elevator cabin completes an upwards trajectory, the transverse element completes its trajectory from height H to its uppermost position.

A pulley wire rope substantially as herein disclosed is understood as any type of relatively thick cable.

As further shown in figure 1, the top fixed diverting pulley 7 is attached at or near an uppermost part U of the elevator path and the bottom fixed diverting pulley 8 is attached at or near a lowermost part L of the elevator path. The cabin 1 is shown at its lowermost position of the elevator path and the transverse element 4 is hung from the end 61 of the pulley wire rope 6 at a height H, at approximately half the height of the elevator path. Alternatively or additionally, the transverse element may be supported by a support structure provided e.g. at a working platform of the elevator path. Such a support structure could also be directly fixed to an inner wall of the elevator path or attached at e.g. a ladder of the elevator path. In some of these cases, the pulley wire rope may be mounted with a certain predefined looseness such that it allows the elevator cabin to begin its up and down movement before the pulley wire rope pulls the transverse element.

The pulley wire rope 6 comprises a first end portion 611 operationally coupled with the transverse element 4, an intermediate portion 63 that runs between the top 7 and bottom 8 fixed diverting pulleys and a second end portion 62 operationally coupled with the elevator cabin 1.

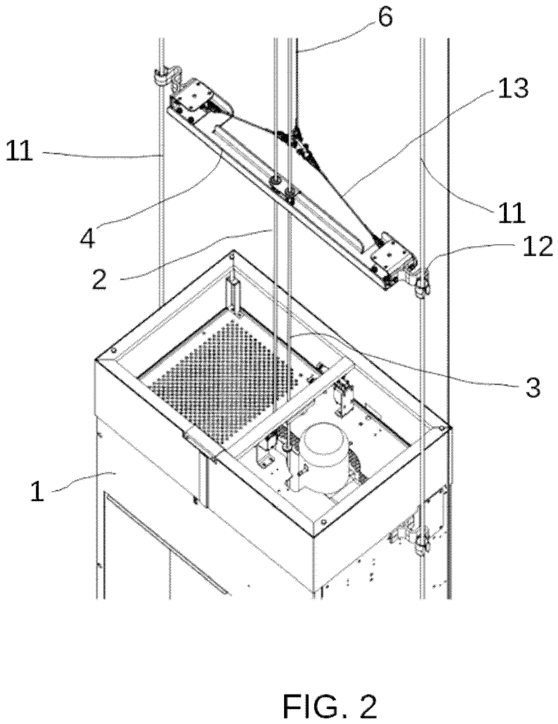

Figure 2 shows a perspective partial view of the elevator system of figure 1. Particularly, a top portion of the elevator cabin 1 is shown. In this example, the elevator cabin 1 is guided by a pair of taut cables 11 running laterally from the elevator cabin 1 and the transverse element 4 is further configured to be guided along the taut cables 11. In more examples, the elevator cabin may be configured to be guided by a ladder arranged on an inner surface of the elevator path and the transverse element may be configured to be guided along the ladder. Other rigid guiding elements may be foreseen for guiding the elevator cabin in its up and down movement, e.g. a guide rail or a pair of guide rails.

Further in this example, for guiding the transverse element 4 along the taut cables 11 both ends of the transverse element 4 are provided with wire guides 12 that may be fixed to the transverse element ends by screws or bolts. Alternatively, such wire guides may be welded to the transverse elements or they may be integrally built. In particular, as further shown in figure 2, the wire guides are C-shaped. In more examples, wire guides having other shapes or runners or rollers may also be foreseen as long as the transverse element may be adapted to be slidably mounted with respect to the taut cables or to the ladder or to any other rigid guiding element that may be provided for guiding the elevator cabin.

As further shown in figure 2, each end of the transverse element 4 is connected to a diagonal rope or tensor 13 that is secured to the pulley wire rope 6. The diagonal tensor aids stabilizing the transverse element which in turn stabilizes the traction and/or security wire rope. Other ways of ensuring a safe pulling up of the transverse element along the traction and/or security wire rope may be foreseen.

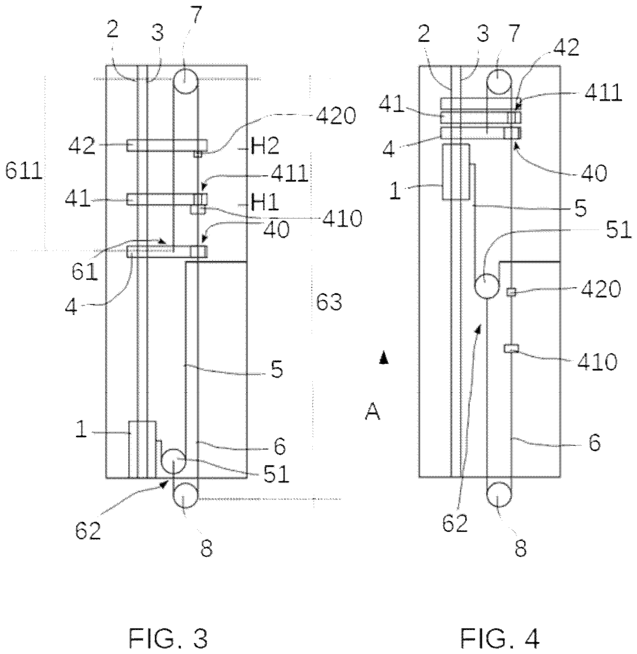

Figures 3 and 4 show schematic side views of an elevator system according to another example, arranged e.g. in a slender tower such as a wind turbine tower, in two different positions of the elevator cabin within the tower. Figure 3 shows an initial position in which the elevator cabin 1 is in its lowermost position, at ground level. Figure 4 shows a final position in which the elevator cabin 1 is in its uppermost position.

The example of figures 3 and 4 differs from that of figure 1 in that a first 41 and a second 42 additional transverse elements are provided above transverse element 4. The first 41 and second 42 additional transverse elements are also adapted to be guided along the traction wire rope 2 and/or security wire rope 3. The first 41 and second 42 transverse elements are provided spaced apart along the height of the elevator path and spaced apart from transverse element 4. This way, the additional transverse elements arranged distanced apart along the height of the elevator path further contribute to restricting movements of the traction and/or security wire ropes housed inside the elevator path thereby contributing to avoid, or at least reduce, the striking of these wires with other components that may be arranged in the elevator path. In addition, these additional transverse elements may also act as spacers as explained above. In more examples, other numbers of additional transverse elements may be foreseen and even a single one.

Further in this example, in order to support the first 41 and second 42 additional transverse elements, the pulley wire rope 6 is provided with respective stoppers 410, 420 configured to support and substantially impede movement of the first 41 and second 42 additional transverse elements in a downwards direction and to allow them to move in an upwards direction. The stoppers 410, 420 are provided at the intermediate portion 63 of the pulley wire rope 6 that is left in between top diverting pulley 7 and the bottom diverting pulley 8. The stoppers 410, 420 are provided at different heights H1, H2 higher than the height H, at approximately half the height of the elevator path when the elevator cabin is in the lowermost positon L.

In this example, the transverse element 4 is arranged closer to the elevator cabin 1 than the first 41 and the second 42 additional transverse elements. The transverse element 4 is provided with an orifice 40 in correspondence with the stopper 410 arranged at the intermediate portion 63 of the pulley wire rope 6. The orifice 40 has a size such that the stopper 410 provided for supporting the first additional transverse element 41 that is closer to transverse element 4 than the second additional transverse element 42 can pass there through when the cabin travels upwards. The first additional transverse element 41 is also provided with an orifice 411 in correspondence with the stopper 420 arranged at the intermediate portion 63 of the pulley wire rope 6. The orifice 411 has a size such that the stopper 420 provided for supporting second additional transverse element 42 can pass there through when the cabin 1 travels upwards.

In the example of figure 3, the elevator cabin 1 is shown at ground level (lowermost position). The transverse element 4 is hung from the first end 61 of the pulley wire rope at approximately half the height of the elevator path (H). The first 41 and second 42 additional transverse elements are respectively resting on the stoppers 410 and 411 of the intermediate portion 63 of the pulley wire rope 6. After an upwards career or trajectory of the elevator cabin 1 (see arrow A), figure 4 shows the elevator cabin 1 is in its final or uppermost position, and the pulley 51 movably suspended on the travelling cable 5 drags the second end portion 62 of the pulley wire rope 6 thereby increasing its length, and raising the first end 61 thereby pulling up the transverse element 4 that initially traverses the stopper 410 and pushes the first additional transverse element 41 and then transverse elements 4 and 41 traverse the stopper 420 and push the second additional transverse element 42 such that all transverse elements reach their uppermost position, leaving space for the upwards career of the elevator cabin.

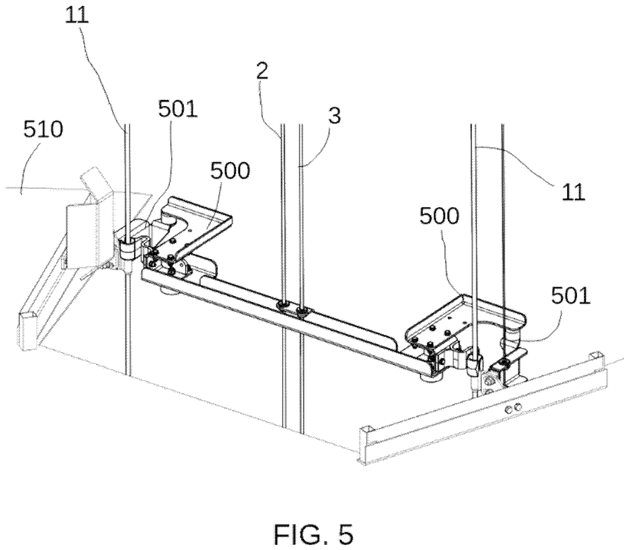

Figure 5 shows a perspective partial view of an elevator system that like the system of figures 3 and 4 may halve multiple transverse elements. This example differs from that of figures 3 and 4 in that instead of stoppers, the additional transverse elements are held by a supporting structure. In particular, the supporting structure may be an L support 501 arranged at e.g. a working platform 510 of the elevator path. Particularly, an additional transverse element 41 or 42 is shown comprising an extension 500 or catch which may also be adapted to be slidably mounted with respect to of the taut cables 11 guiding the elevator cabin. At each platform a support, e.g. an L shaped support 501 as shown in the example of figure 5 may be provided. The extension 500 held up on the L shaped support 501 holds the additional transverse element in its position. The L-shaped support may protrude from the working platform a length such that the movement of the elevator cabin is allowed. When additional transverse elements are provided, the extensions and L-shaped supports related to an additional transverse element arranged higher along the elevator path need to be designed together (in size/shape and location) in order for the movement of other additional transverse element(s) that may be arranged below and of the elevator cabin not to be obstructed.

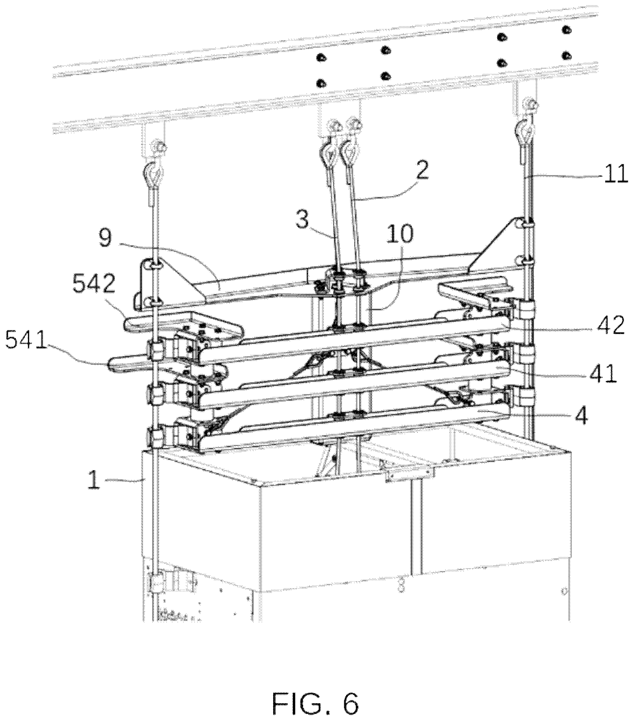

In an example, as shown in figure 6, additional transverse element 42 has an extension 542 that is shorter than extension 541 of additional transverse element 41. The L-shaped supports for holding the additional transverse elements at different heights along the elevator path may have the same size/shape and they may be mounted vertically and horizontally offset with respect to each other. This way, the different extensions 541, 542 can each mate with a different L-shaped support and the different additional transverse elements can be held up at different heights along the elevator path. Alternatively, the L-shaped supports may have a different size/shape. In further alternatives, the additional transverse elements may have different lengths and extensions may be avoided.

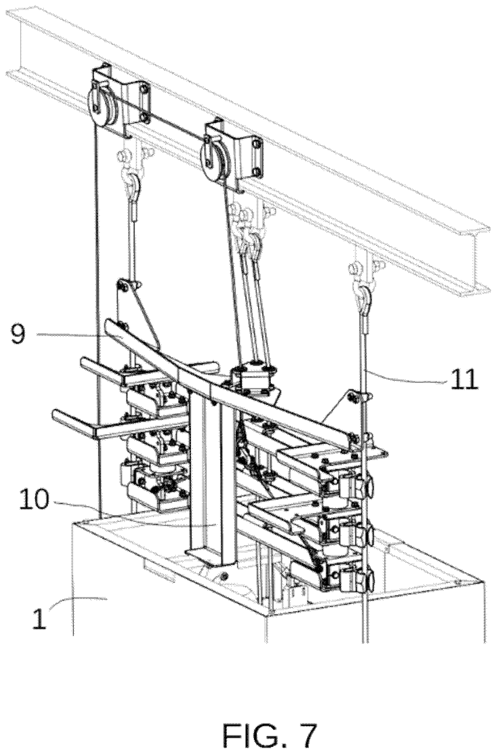

Figures 6 and 7 show perspective partial views of an elevator system according to a further example which (like figure 5) has extensions 542, 541. Figure 6 is shown from a front of the elevator cabin 1 and figure 7 from a back of the elevator cabin 1. According to this example, a stopping transverse bar 9 is provided at the uppermost position, e.g. attached to the taut guide wires 11 guiding the elevator cabin 1. From such a stopping transverse bar 9 a vertical bar 10, attached or integrally formed with the stopping transverse bar 9 is provided. A length of the vertical bar 10 is such that it is larger than all transverse elements, in this example 4, 41 and 42, being grouped together in its uppermost position so as to act as a stop or spacer for the elevator cabin 1.

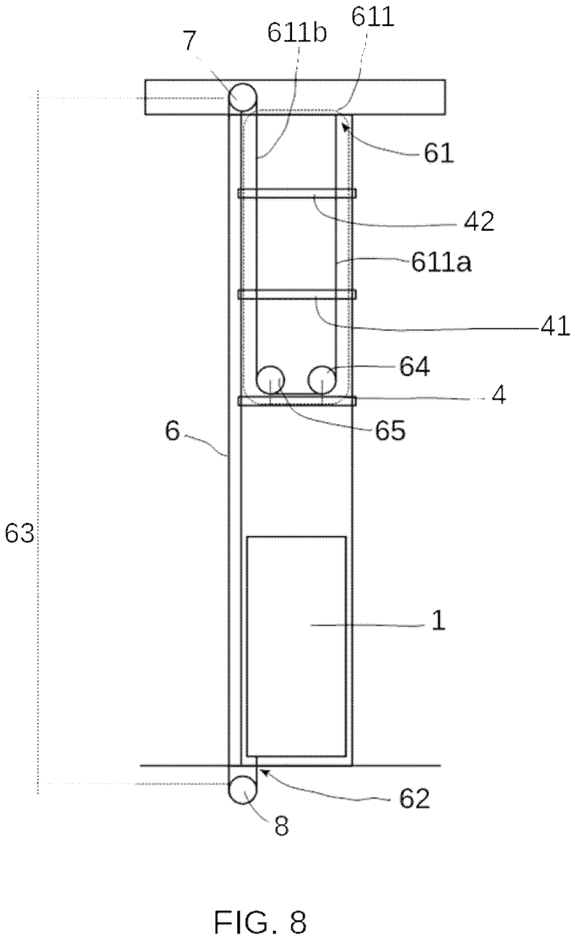

Figure 8 shows a schematic side view of an elevator system according to yet a further example. In this example, the second end portion 62 of the pulley wire rope 6 is directly fixed to the cabin 1 and the first end portion 611 of the pulley wire rope 6 is connected to the transverse element 4 by passing around two intermediate diverting pulleys 64, 65 mounted on the transverse element 4. The end 61 of the pulley wire rope is directly fixed to an upper structure provided at the uppermost position of the elevator path. In this particular example, the end of the pulley wire rope is fixed to the same structure that holds/supports the top fixed diverting pulley 7. In alternatives, other numbers of intermediate diverting pulleys may be foreseen, and even a single one.

The provision of the intermediate diverting pulleys of this example provides for a first end portion 611 having two sub-portions or sections 611 a and 611b that support (and pulls) the transverse element. This configuration reduces the speed at which the pulley wire rope 6 pulls up the transverse element 4 to half the speed of the elevator cabin, when the elevator cabin moves upwards and the other end 62 of the pulley wire rope 6 is directly fixed to the elevator cabin 1.

In more examples, a pulley wire rope 6 having a first end portion 611 in two sections substantially as described in figure 8 may be combined with a second end portion 62 directly fixed to a travelling cable pulley substantially as explained in connection with figures 1, 3 and 4. In these cases, the transverse element (or elements) pulled by the pulley wire rope travels at a lower speed than when it is directly fixed to the cabin, e.g. a quarter the speed of the elevator cabin. This way, the transverse element that is provided closer to the elevator cabin (when there are more than one transverse elements) may be arranged at a height that may be substantially 75% the total height of the elevator path.

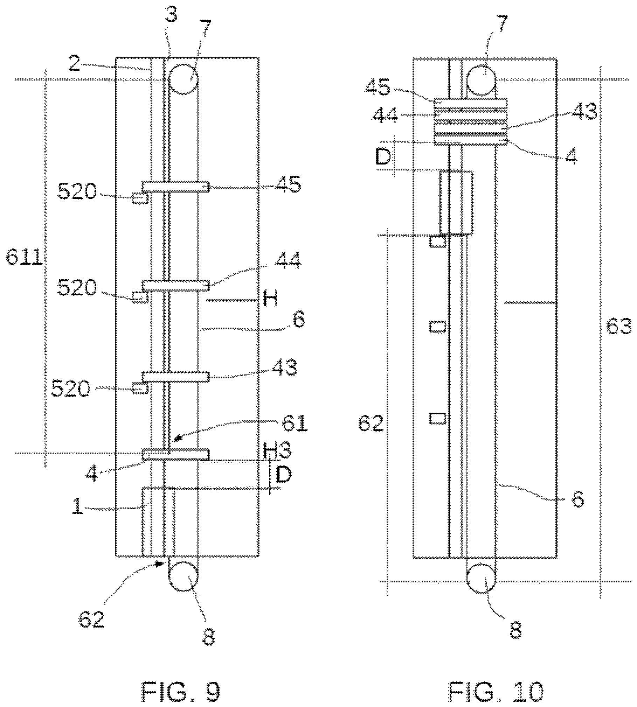

Figures 9 and 10 schematically show side views of an elevator system according to yet a further example, arranged e.g. in a slender tower such as a wind turbine tower in two different positions of the elevator cabin within the tower. The example of figures 9 and 10 differs from that of figures 3 and 4 or 8 in that the transverse element pulled by the pulley wire rope travels at the same speed as that of the elevator cabin. To do this, the second end portion 62 of the pulley wire rope 6 is directly fixed to the cabin 1 and the first end portion 611 of the pulley wire rope 6 is directly connected to the transverse element 4 by directly fixing its end 61 to the transverse element 4. The pulley cable system is thus configured to move or displace the transverse element in the same direction as the elevator cabin along at least a portion of the elevator path. In this example, the pulley cable system can thus displace the transverse element at the same speed of displacement of the elevator cabin, i.e. in unison. This means that the transverse element is supported along the elevator path at a constant distance D of the elevator cabin. In some of these cases, the pulley wire rope may be mounted with a certain predefined looseness such that it allows the elevator cabin to begin its up and down movement before the pulley wire rope pulls the transverse element. Such a looseness is defined as a function of the distance D between the transverse element and the elevator cabin or *vice versa.*

Figure 9 shows an initial position in which the elevator cabin 1 is in its lowermost position, at ground level. Figure 10 shows a final position in which the elevator cabin 1 is in its uppermost position. In both figures the constant distance D between the elevator cabin 1 and the transverse element 4 is depicted. Figure 9 shows that the transverse element 4 can thus be hung from the end 61 of the pulley wire rope 6 at a height H3 that is lower half the height of the elevator path. These examples may be particularly suitable for high and slender structures such as wind turbines, particularly when e.g. a section of the tower has a conical shape.

The example of figures 9 and 10 also comprises first 43, second 44 and third 45 additional transverse elements that are supported at different heights along the elevator path with supporting structures 520 substantially as explained in connection with the example of figure 5. Other number of additional transverse elements may also be foreseen. In these examples, for each supporting structure 520, a length and/or shape and/or position of the L support protruding from a working platform and of the extension of an additional transverse element arranged higher along the elevator path may be such that an immediately below additional transverse element that may be arranged below and the elevator cabin can pass there through.

Particularly, as shown in figures 9 and 10, a length of the L-shaped support supporting the third additional transverse element 45 is shorter than that provided for supporting the second additional transverse element 44 that is in turn shorter than that provided for supporting the first additional transverse element 43. And the extension of the third additional transverse element 45 is longer than that provided for supporting the second additional transverse element 44 that is in turn longer than that provided for supporting the first additional transverse element 43. Moreover, all L-shaped supports may protrude from the respective working platforms a length such that they do not interfere with the movement of the elevator cabin and of the transverse element 4. Put in other words, the size of the supporting structure is designed such the immediately below transverse element and the elevator cabin can pass there through.

In some examples, more additional transverse elements substantially as hereinbefore described may be foreseen. For each additional transverse element a stopper or a support structure substantially as hereinbefore described may be provided. For each stopper the transverse element immediately below is fitted with an orifice substantially as explained above. And for each support structure, the size of the L supports and extensions is designed such the immediately below transverse element and the elevator cabin can pass there through.

Furthermore, the provision of the wire guiding system substantially as hereinbefore described is relatively simple to implement. It can therefore be easily retrofitted into existing elevator systems having a traction and/or security wire ropes. In some examples, the transverse element may be built in two or more portions formed such that they can be easily put together around the traction and/or security wire ropes. In these cases, mounting a wire guiding system in existing elevator systems having traction and/or security wire ropes may be done without dismantling of the traction and/or security wire ropes by simply joining together the two or more portions of transverse element around the wire ropes.

In that sense, a method for retrofitting an elevator system comprising an elevator cabin configured to perform an up and down movement along an elevator path and comprising a traction and/or security wire rope and a transverse element provided above the elevator cabin in the elevator path may be provided. The method comprises providing a pulley cable system and operationally coupling the pulley cable system to the elevator cabin and to the transverse element. Alternatively, in those elevator systems which do not yet incorporate the transverse element, retrofitting methods may further involve providing a transverse element configured to be guided by the traction and/or security wire rope, particularly a transverse element built in two or more portions, and mounting the transverse element above the elevator cabin.

According to these methods, existing elevator systems may be retrofitted to add the additional functionalities substantially as hereinbefore described.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by the claims that follow.

## Claims

1. An elevator system comprising:
an elevator cabin (1) configured to perform an up and down movement along an elevator path, and
a traction wire rope (2) for driving the elevator cabin in the up and down movement and/or a safety wire rope (3), wherein
the elevator system further comprises
a wire guiding system including
a transverse element (4) provided above the elevator cabin (1) in the elevator path, the transverse element (4) being adapted to be guided along the traction wire rope (2) and/or safety wire rope (3), and **characterised by**
a pulley cable system operationally coupled to the elevator cabin (1) and to the transverse element (4) such that along at least a portion of the elevator path, the transverse element moves in the same direction as the elevator cabin, and
wherein the pulley cable system comprises a pulley wire rope (6) operationally coupled to the transverse element (4) and to the elevator cabin (1), the pulley wire rope (6) is configured to pass around a top fixed diverting pulley (7) provided at or near an uppermost portion (U) of the elevator path and a bottom fixed diverting pulley (8) provided at or near a lowermost portion (L) of the elevator path,
wherein the pulley wire rope comprises a first end portion (61) operationally coupled to the transverse element, an intermediate portion (63) running between the top and bottom fixed diverting pulleys and a second end portion (62) operationally coupled to the cabin (1).

2. The elevator system of claim 1, wherein the transverse element (4) is supported at a predetermined height (H, H1, H2) along the elevator path such that its movement in a downwards direction is impeded and it is pulled in an upwards direction by the pulley cable system.

3. The elevator system of claim 2, wherein the transverse element (4) is hung from pulley cable system.

4. The elevator system of any of claims 1 - 3 , wherein the elevator system further comprises a travelling cable (5) for supplying energy to the cabin and/or for signal communications with components associated with the elevator cabin, the elevator system further comprises a pulley (51) movably suspended on the travelling cable (5), the travelling cable being connected to the elevator cabin (1) so as to travel with the up and down movement of the elevator cabin (1), wherein the second end portion of the pulley wire rope is directly fixed to the travelling cable pulley.

5. The elevator system of any of claims 1 - 4, wherein the first end portion (61) of the pulley wire rope is directly fixed to the transverse element.

6. The elevator system of any of claims 1 - 3, wherein the second end (62) portion of the pulley wire rope is directly fixed to the elevator cabin (1) and the first end portion (61) of the pulley wire rope is connected to the transverse element (4) by passing around an intermediate diverting pulley (64, 65) mounted on the transverse element (4) and fixing its end to an upper structure provided at or near the uppermost portion of the elevator path.

7. The elevator system of any of claims 1 - 4, wherein the first end portion of the pulley wire rope is connected to the transverse element by passing around an intermediate diverting pulley mounted on the transverse element and fixing its end to an upper structure provided at or near the uppermost portion of the elevator path.

8. The elevator system of any of claims 1 - 7, wherein the pulley cable system is configured to displace the transverse element (4) at a speed that is substantially one half a speed of the elevator cabin.

9. The elevator system of any of claims 1 - 8, wherein the transverse element (4) is supported along the elevator path at a height that is substantially one half a height of the up and down movement of the elevator cabin along an elevator path.

10. The elevator system of any of claims 1 - 3, wherein the second end portion (62) of the pulley wire rope is directly fixed to the elevator cabin (1) and the first end portion (61) of the pulley wire rope is directly fixed to the transverse element (4) such that the pulley cable system displaces the transverse element at a speed that is substantially the same as that of the elevator cabin.

11. The elevator system of any of claims 1 - 10, comprising a further transverse element (41, 42) provided above the transverse element (4) along the elevator path, the further transverse element (41, 42) being held by a supporting structure comprising matching supports respectively provided at the further transverse element (41, 42) and at a working platform of the elevator path, the supporting structure being configured to substantially impede movement of the further transverse element in a downwards direction and to allow movement of the further transverse element in an upwards direction, the matching supports (501) being further configured to allow the transverse element and the elevator cabin to pass there through when the elevator cabin moves upwards.

12. The elevator system of claim 11, wherein end portions of the transverse element are provided with extensions (541, 542) that are foldable, removable or retractable.

13. The elevator system of any of claims 4 - 10, comprising a further transverse element (43, 44, 45) provided above the transverse element (4) along the elevator path and the pulley wire rope comprises stoppers (410, 420) configured to support and substantially impede movement of the further transverse element in a downwards direction and to allow movement of the further transverse element in an upwards direction, the transverse element comprising an orifice (40) in correspondence with a portion of the pulley wire rope having the stopper, the orifice (40) being configured to allow the stopper to pass there through when the elevator cabin moves upwards.

14. A wind turbine comprising an elevator system according to any of claims 1 - 13 arranged within a wind turbine tower.

## Patentansprüche

1. Ein Aufzugsystem umfassend:
eine Aufzugskabine (1), die konfiguriert ist, um eine Bewegung nach oben und nach unten entlang einer Aufzugsbahn auszuführen, und
ein Zugdrahtseil (2) zum Leiten der Aufzugskabine in der Bewegung nach oben und nach unten und/oder ein Sicherungsseil (3), wobei
das Aufzugsystem weiterhin folgendes umfasst
ein Drahtführungssystem einschließlich
eines über der Aufzugskabine (1) in der Aufzugsbahn bereitgestellten Querelements (4), wobei das Querelement (4) angepasst ist, um entlang des Zugdrahtseils (2) und oder des Sicherungsseils (3) geführt zu werden, und **gekennzeichnet durch**
ein Rollenkabelsystem, das an der Aufzugskabine (1) und dem Querelement (4) betriebsfähig gekoppelt ist, so dass das Querelement sich entlang mindestens eines Teils der Aufzugsbahn in der gleichen Richtung wie die Aufzugskabine bewegt, und
wobei das Rollenkabelsystem ein Rollendrahtseil (6) umfasst, das betriebsfähig an dem Querelement (4) und der Aufzugskabine (1) gekoppelt ist, wobei das Rollendrahtseil (6) konfiguriert ist, um um eine oben befestigte Umlenkrolle (7), die an oder in der Nähe von einem obersten Teil (U) der Aufzugskabine bereitgestellt ist und um eine unten befestigte Umlenkrolle (8), die an oder in der Nähe von einem untersten Teil (L) der Aufzugskabine bereitgestellt ist, herum geführt zu werden,
wobei das Rollendrahtseil folgendes umfasst: einen ersten Endteil (61), der an dem Querelement betriebsfähig gekoppelt ist, einen Mittelteil (63), der zwischen der oben und der unten befestigten Umlenkrolle verläuft und einen zweiten Endteil (62), der an der Kabine (1) betriebsfähig gekoppelt ist.

2. Das Aufzugsystem des Anspruchs 1, wobei das Querelement (4) auf einer vorherbestimmten Höhe (H, H1, H2) entlang der Aufzugsbahn gestützt ist, so dass seine Bewegung in einer Richtung nach unten gehindert ist und es in einer Richtung nach oben von dem Rollenkabelsystem gezogen wird.

3. Das Aufzugsystem des Anspruchs 2, wobei das Querelement (4) an dem Rollenkabelsystem hängt.

4. Das Aufzugsystem von einem der Ansprüche 1 - 3, wobei das Aufzugsystem weiterhin ein mitfahrendes Kabel (5) zur Versorgung der Kabine mit Energie und/oder zur Herstellung von Signalverbindungen mit mit der Aufzugskabine verknüpften Komponenten umfasst, wobei das Aufzugsystem weiterhin folgendes umfasst: eine Rolle (51), die beweglich an dem mitfahrenden Kabel (5) aufgehängt ist, wobei das mitfahrende Kabel mit der Aufzugskabine (1) verbunden ist, so dass es mit der Bewegung der Aufzugskabine (1) nach oben und nach unten fährt, wobei der zweite Endteil des Rollendrahtseils an der mitfahrenden Seilrolle unmittelbar befestigt ist.

5. Das Aufzugsystem von einem der Ansprüche 1 - 4, wobei der erste Endteil (61) des Rollendrahtseils an dem Querelement unmittelbar befestigt ist.

6. Das Aufzugsystem von einem der Ansprüche 1 - 3, wobei der zweite Endteil (62) des Rollendrahtseils an der Aufzugskabine (1) unmittelbar befestigt ist und der erste Endteil (61) des Rollendrahtseils mit dem Querelement (4) verbunden wird, in dem er um eine auf dem Querelement (4) montierte mittlere Umlenkrolle (64, 65) herum geführt wird und sein Ende an einer am oder in der Nähe des obersten Teils der Aufzugsbahn bereitgestellten oberen Struktur befestigt wird.

7. Das Aufzugsystem von einem der Ansprüche 1 - 4, wobei der erste Endteil des Rollendrahtseils an dem Querelement verbunden wird, in dem er um eine auf dem Querelement montierte mittlere Umlenkrolle herum geführt wird und sein Ende an einer am oder in der Nähe des obersten Teils der Aufzugsbahn bereitgestellten oberen Struktur befestigt wird.

8. Das Aufzugsystem von einem der Ansprüche 1 - 7, wobei das Rollenkabelsystem konfiguriert ist, um das Querelement (4) mit einer Geschwindigkeit zu versetzen, die im Wesentlichen der Hälfte von einer Geschwindigkeit der Aufzugskabine entspricht.

9. Das Aufzugsystem von einem der Ansprüche 1 - 8, wobei das Querelement (4) entlang der Aufzugsbahn auf einer Höhe gestützt ist, die im Wesentlichen der Hälfte von einer Höhe der Bewegung der Aufzugskabine nach oben und nach unten entlang einer Aufzugsbahn entspricht.

10. Das Aufzugsystem von einem der Ansprüche 1 - 3, wobei der zweite Endteil (62) des Rollendrahtseils an der Aufzugskabine (1) unmittelbar befestigt ist und der erste Endteil (61) des Rollendrahtseils an dem Querelement (4) unmittelbar befestigt ist, so dass das Rollenkabelsystem das Querelement mit einer Geschwindigkeit versetzt, die im Wesentlichen die gleiche wie die der Aufzugskabine ist.

11. Das Aufzugsystem von einem der Ansprüche 1 - 10, umfassend ein weiteres Querelement (41, 42), das über dem Querelement (4) entlang der Aufzugsbahn bereitgestellt ist, wobei das weitere Querelement (41, 42) durch eine Tragstruktur gehalten wird, die passende tragende Teile umfasst, die jeweils an dem weiteren Querelement (41, 42) und an einer Arbeitsplattform der Aufzugsbahn bereitgestellt sind, wobei die Tragstruktur konfiguriert ist, um eine Bewegung des weiteren Querelements in einer Richtung nach unten im Wesentlichen zu verhindern und um eine Bewegung des weiteren Querelements in einer Richtung nach oben zu ermöglichen, wobei die passenden tragenden Teile (501) ferner konfiguriert sind, so dass das Querelement und die Aufzugskabine diese durchgehen können, wenn sich die Aufzugskabine nach oben bewegt.

12. Das Aufzugsystem des Anspruchs 11, wobei Endteile des Querelements mit Verlängerungsstücken (541, 542) versehen sind, die klappbar, entfernbar oder einziehbar sind.

13. Das Aufzugsystem von einem der Ansprüche 4 - 10, umfassend ein weiteres Querelement (43, 44, 45), das über dem Querelement (4) entlang der Aufzugsbahn bereitgestellt ist und wobei das Rollendrahtseil ein Anschlagmittel (410, 420) umfasst, das konfiguriert sind, um das weitere Querelement zu stützen und eine Bewegung dessen in einer Richtung nach unten im Wesentlichen zu verhindern und eine Bewegung des weiteren Querelements in einer Richtung nach oben zu ermöglichen, wobei das Querelement eine Öffnung (40) entsprechend einem das Anschlagmittel aufweisenden Teil des Rollendrahtseils umfasst, wobei die Öffnung (40) konfiguriert ist, so dass das Anschlagmittel diese durchgehen kann, wenn sich die Aufzugskabine nach oben bewegt.

14. Eine Windturbine umfassend ein Aufzugsystem nach einem der Ansprüche 1 - 13, das innerhalb eines Windturbinenturms angeordnet ist.

## Revendications

1. Un système élévateur comprenant :
une cabine d'élévateur (1) configurée pour effectuer un mouvement ascendant et descendant le long d'un parcours d'élévateur, et
un câble métallique à traction (2) pour conduire la cabine d'élévateur dans la direction ascendante et descendante et/ou un câble métallique de sécurité (3), dans lequel
le système élévateur comprend en outre
un système de guidage par câbles incluant
un élément transversal (4) fourni au-dessus de la cabine d'élévateur (1) dans le parcours d'élévateur, l'élément transversal (4) étant adapté pour être guidé le long du câble métallique à traction (2) et/ou du câble métallique de sécurité (3), et **caractérisé par**
un système de câbles de poulie couplé de façon opérationnelle avec la cabine d'élévateur (1) et avec l'élément transversal (4) de façon que le long d'au moins une partie du parcours d'élévateur, l'élément transversal se déplace dans la même direction que la cabine d'élévateur, et
dans lequel le système de câbles de poulie comprend un câble métallique de poulie (6) couplé de façon opérationnelle avec l'élément transversal (4) et avec la cabine d'élévateur (1), le câble métallique de poulie (6) est configuré pour passer autour d'une poulie de déviation fixée par la partie supérieure (7) fournie dans ou près d'une partie à hauteur maximale (U) du parcours d'élévateur et une poulie de déviation fixée par la partie inférieure (8) fournie dans ou près d'une partie à hauteur minimale (L) du parcours d'élévateur,
dans lequel le câble métallique de poulie comprend une première partie d'extrémité (61) couplée de façon opérationnelle avec l'élément transversal, une partie intermédiaire (63) parcourant entre les poulies de déviation fixées par la partie supérieure et par la partie inférieure et une seconde partie d'extrémité (62) couplée de façon opérationnelle avec la cabine (1).

2. Le système élévateur de la revendication 1, dans lequel l'élément transversal (4) est supporté à une hauteur prédéterminée (H, H1, H2) le long du parcours d'élévateur de façon que son mouvement dans une direction descendante est empêché et qu'il est tiré dans une direction ascendante par le système de câbles de poulie.

3. Le système élévateur de la revendication 2, dans lequel l'élément transversal (4) est pendu au système de câbles de poulie.

4. Le système élévateur de l'une quelconque des revendications 1 - 3, dans lequel le système élévateur comprend en outre un câble voyageur (5) pour fournir de l'énergie à la cabine et/ou pour des communications de signaux avec des composants liés à la cabine d'élévateur, le système élévateur comprend en outre une poulie (51) suspendue de manière mobile sur le câble voyageur (5), le câble voyageur étant relié à la cabine d'élévateur (1) de façon à voyager avec le mouvement ascendante et descendante de la cabine d'élévateur (1), dans lequel la seconde partie d'extrémité du câble métallique de poulie est fixée directement à la poulie à câble voyageur.

5. Le système élévateur de l'une quelconque des revendications 1 - 4, dans lequel la première partie d'extrémité (61) du câble métallique de poulie est fixée directement à l'élément transversal.

6. Le système élévateur de l'une quelconque des revendications 1 - 3, dans lequel la seconde partie d'extrémité (62) du câble métallique de poulie est fixée directement à la cabine d'élévateur (1) et la première partie d'extrémité (61) du câble métallique de poulie est reliée à l'élément transversal (4) en passant autour d'une poulie de déviation intermédiaire (64, 65) montée sur l'élément transversal (4) et en fixant son extrémité à une structure supérieure fournie dans ou près de la partie à hauteur maximale du parcours d'élévateur.

7. Le système élévateur de l'une quelconque des revendications 1 - 4, dans lequel la première partie d'extrémité du câble métallique de poulie est reliée à l'élément transversal en passant autour d'une poulie de déviation intermédiaire montée sur l'élément transversal et en fixant son extrémité à une structure supérieure fournie dans ou près de la partie à hauteur maximale du parcours d'élévateur.

8. Le système élévateur de l'une quelconque des revendications 1 - 7, dans lequel le système de câbles de poulie est configuré pour déplacer l'élément transversal (4) à une vitesse qui est essentiellement la moitié d'une vitesse de la cabine d'élévateur.

9. Le système élévateur de l'une quelconque des revendications 1 - 8, dans lequel l'élément transversal (4) est supporté le long du parcours d'élévateur à une hauteur qui est essentiellement la moitié d'une hauteur du mouvement ascendante et descendante de la cabine d'élévateur le long d'un parcours d'élévateur.

10. Le système élévateur de l'une quelconque des revendications 1 - 3, dans lequel la seconde partie d'extrémité (62) du câble métallique de poulie est fixée directement à la cabine d'élévateur (1) et la première partie d'extrémité (61) du câble métallique de poulie est fixée directement à l'élément transversal (4) de façon que le système de câbles de poulie déplace l'élément transversal à une vitesse qui est essentiellement la même que celle de la cabine d'élévateur.

11. Le système élévateur de l'une quelconque des revendications 1 - 10, comprenant un élément transversal additionnel (41, 42) fourni au-dessus de l'élément transversal (4) le long du parcours d'élévateur, l'élément transversal additionnel (41, 42) étant soutenu par une structure porteuse comprenant des supports correspondants fournis respectivement dans l'élément transversal additionnel (41, 42) et dans une plateforme de travail du parcours d'élévateur, la structure porteuse étant configurée pour empêcher essentiellement un mouvement de l'élément transversal additionnel dans une direction descendante et pour permettre un mouvement de l'élément transversal additionnel dans une direction ascendante, les supports correspondants (501) étant configurés en outre pour permettre le passage de l'élément transversal et de la cabine d'élévateur à travers ceux-ci lorsque la cabine d'élévateur se déplace en direction ascendante.

12. Le système élévateur de la revendication 11, dans lequel des parties d'extrémité de l'élément transversal sont munies d'éléments de rallonge (541, 542) qui sont pliables, amovibles ou rétractables.

13. Le système élévateur de l'une quelconque des revendications 4-10, comprenant un élément transversal additionnel (43, 44, 45) fourni au-dessus de l'élément transversal (4) le long du parcours d'élévateur et le câble métallique de poulie comprend un moyen d'arrêt (410, 420) configuré pour supporter et essentiellement empêcher un mouvement de l'élément transversal additionnel dans une direction descendante et pour permettre un mouvement de l'élément transversal additionnel dans une direction ascendante, l'élément transversal comprenant un orifice (40) en correspondance avec une partie du câble métallique de poulie ayant le moyen d'arrêt, l'orifice (40) étant configuré pour permettre le passage du moyen d'arrêt à travers celui-ci lorsque la cabine d'élévateur se déplace en direction ascendante.

14. Une éolienne comprenant un système élévateur selon l'une quelconque des revendications 1 - 13 disposé dans une tour d'éolienne.
